# EUROPEAN PATENT SPECIFICATION

(11) **EP 2 017 169 B1**
(45) Date of publication and mention of the grant of the patent: **03.03.2010**
(21) Application number: 08010053.0
(22) Date of filing: 02.06.2008
(51) Int. Cl.: B62J 17/04

(54) **Windscreen supporting mechanism for motorcycle**
Windschutzscheibenstützmechanismus für ein Motorrad
Mécanisme de support de pare-brise pour motocyclette

(30) Priority: 20.07.2007 JP 2007189823
(43) Date of publication of application: 21.01.2009
(73) Proprietor: Honda Motor Co., Ltd., Tokyo 107-8556 (JP)
(72) Inventor: Inoue, Yoshihiro, Wako-shi Saitama 351-0193 (JP); Nakajima, Jun, Wako-shi Saitama 351-0193 (JP)
(74) Representative: Liska, Horst

(56) References cited:
- EP-A- 1 752 367
- FR-A- 2 592 852
- US-A1- 2006 028 045

## Description

### Technical Field

The present invention relates to a motorcycle having a wind screen supporting mechanism to support a wind screen in a vertically movable manner.

### Background Art

A wind screen is provided on the front upper part of a motorcade to shield a rider from the wind during a run. It is desirable that the rider can move this wind screen to a position which he/she selects. To enable movement of the wind screen, a wind screen supporting mechanism which vertically movably supports the wind screen is provided on the front of the motorcycle.

A motorcycle which has a wind screen supporting mechanism with a motorized moving device for vertical movement of the wind screen has been known (for example, see Patent Document No. JP-A-2003-081160) (Figs. 8 and 9).

Fig. 8 of Patent Document No. JP-A-2003-081160 shows that the moving device 90 includes: a guide part 91 which is attached to an upper cowl 19 and extends in the y direction; a movable part 92 which is slidably supported by the guide part 91; and a connection part 94 which connects the movable part 92 and the wind screen 27. Also Fig. 9 of Patent Document No. JP-A-2003-081160 shows that the moving device 90 includes: an electric motor 93 fixed in the center of a supporting member 95 which supports the guide parts 91, 91; and push cables 96, 96 which connect the movable parts 92, 92 with the electric motor 93.

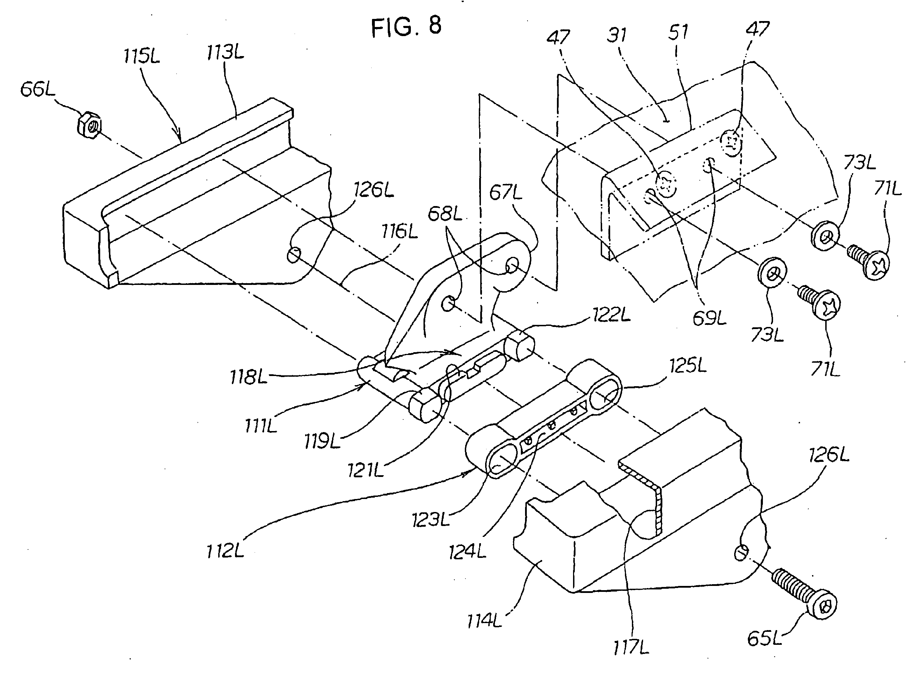

By making the electric motor 93 rotate in a prescribed direction and moving up the movable parts 92, 92 through the push cables 96, 96, the wind screen (27 in Fig. 8) is shifted to an upper position (27' in Fig. 8). Then, by making the electric motor 93 rotate in the reverse direction and moving the movable parts 92, 92 toward the lower parts of the guide parts 91, 91 through the push cables 96, 96, the wind screen is shifted to a lower position.

According to Patent Document No. JP-A-2003-081160, as means to move the movable parts 92, 92 vertically, the moving device 90 has: an electric motor 93; push cables 96, 96; parts to guide the push cables 96, 96; and parts which connect the movable parts 92, 92 with the push cables 96, 96 and so on. Thus, since the moving device 90 uses many parts necessary to move the movable parts 92, 92 vertically, it is expensive.

If the moving device is expensive, it will not be widely used. For this reason, there is demand for an inexpensive moving device (wind screen supporting mechanism).

FR-A-2592862, on which the preamble of claim 1 is based, shows, for example in Figs. 8 and 12, two separate elastic members 188 fitted on the slider 182 on each side of the screen to apply a pushing force to the rails 52.

### Problem to be Solved by the Invention

The present invention has an object to provide a motorcycle with an inexpensive wind screen supporting mechanism which vertically movably supports a wind screen.

### Means for Solving the Problem

The object is achieved by a motorcycle having a windscreen supporting mechanism in accordance with claim 1.

On the assumption that left and right correspond to the body's transverse direction, the sliders have elastic member fitting parts protruding toward inner faces of the rails for fitting the elastic members, on either or both of the left and right sides.

Preferably, the rails have elastic member compressing surfaces inside them to compress front and rear faces of the elastic members which are fitted so as to cover the elastic member fitting parts' front faces on the body's frontward side and their rear faces on the body's rearward side.

### Effect of the Invention

In the invention according to Claim 1, since the wind screen supporting mechanism includes left and right rails, left and right sliders for supporting the wind screen and left and right elastic members, the number of components is decreased. Therefore, a low-priced wind screen supporting mechanism can be realized. According to Claim 1, it is possible to provide an inexpensive wind screen supporting mechanism for a motorcycle which vertically movably supports the wind screen.

In addition, in the wind screen supporting mechanism, when fitting the sliders into the rails, the elastic members are compressed to apply a pushing force to the rails. When the wind screen is moved, the sliders for supporting the wind screen always slide on the rails through the elastic members, so the sliders do not jolt against the rails. Therefore, the sliders are prevented from jolting during movement of the wind screen.

In the invention according to Claim 1, since the elastic member fitting parts of the sliders protrude either left or right, namely in the body transverse direction, the assembly composed of the rails, sliders and elastic members is longitudinally smaller than when the elastic member fitting parts extend forward and backward, namely in the body longitudinal direction. Therefore, since the wind screen is nearer to the wind screen supporting mechanism, the front part of the motorcycle can be more compact.

In the invention according to Claim 1, since the elastic member fitting parts of the sliders protrude left and right, namely in the body transverse direction, the elastic members are fitted to the left elastic member fitting part and right elastic member fitting part respectively. Therefore, since the sliders are supported by the rails through the left elastic member and right elastic member, rigidity in support of the sliders is improved. This permits the sliders to slide smoothly during movement of the wind screen.

In the invention according to Claim 2, since the rails have elastic member compressing surfaces inside them to compress the front and rear faces of the elastic members, when the sliders are fitted into the rails, the elastic members are compressed unfailingly. The elastic members constantly apply a uniform pushing force to the elastic member compressing surfaces, further increasing the possibility that the sliders are prevented from jolting during movement of the wind screen.

### Brief Description of the Drawings

Fig.1 is a side view of a motorcycle which has a wind screen supporting mechanism according to the present invention.
Fig. 2 is a view as seen from 2 in Fig. 1.
Fig. 3 is a sectional view taken along the line 3-3 in Fig. 2.
Fig. 4 is an exploded perspective view of a rail according to the present invention.
Figs. 5 are sectional views showing the positional relation among a rail, slider and elastic member according to the present invention.
Fig. 6 is a sectional view taken along the line 6-6 in Fig. 3.
Figs. 7 are drawings which explain the function of the wind screen supporting mechanism according to the present invention.
Fig. 8 shows a modified version of the embodiment shown in Fig. 4.
Figs. 9 show comparison between a wind screen supporting mechanism as a comparative example and an embodiment of the present invention.

### Best Mode for Carrying Out the Invention

Next, the best mode for carrying out the present invention will be described referring to the accompanying drawings. The drawings should be seen according to the orientation of reference numerals. Here, "front", "rear (back)", "left", "right", "up (or above)" and "down (or below)" refer to directions as viewed from the rider's position.

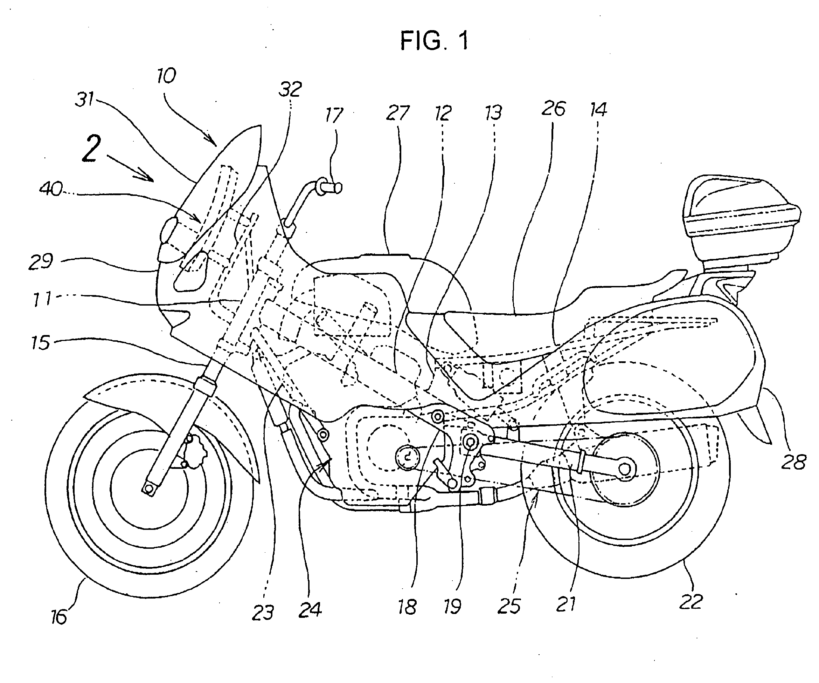

Fig. 1 is a side view of a motorcycle which has a wind screen supporting mechanism according to the present invention. In the motorcycle 10, a main frame 12 extends backward from a head pipe 11; a seat rail 14 extends backward from a stay 13 attached to the rear part of the main frame 12, thus constituting the body; a front fork 15 is rotatably attached to the head pipe 11; a front wheel 15 is attached to the front fork 15; a handlebar 17 is attached to the top of the front fork 15; a pivot plate 18 is attached to the rear end of the main frame 12; a rear swing arm 21 is swingably attached to the pivot plate 18 through a pivot shaft 19; a rear wheel 22 is attached to the rear end of the rear swing arm 21; the main frame 12, pivot plate 18 and down tube 23 support an engine 24; the engine 24 and the rear wheel 22 are connected by a power transmission 25; a seat 26 is mounted on a seat rail 14; a fuel tank 27 is provided ahead of the seat 26; a rear cover 28 covers the seat rail 14 and rear wheel 22; a cowling 29 covers the head pipe 11 and so on; a wind screen 31 covers the upper part of the cowling 29; and a wind screen supporting mechanism 40 is mounted on a support member 32 attached to the head pipe 11 and handlebar 17 in order to support the wind screen 31 in a vertically movable manner.

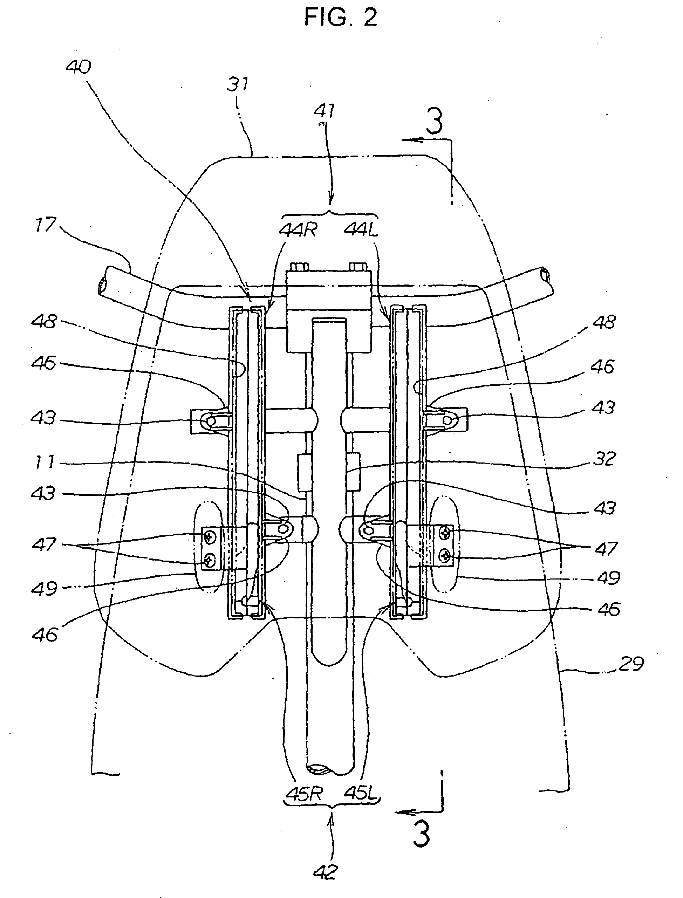

Fig. 2 is a view as seen from 2 in Fig. 1 showing that the window screen supporting mechanism 40 includes: a pair of left and right rails 41 (detailed later) which are fixed on the support member 32 and extend vertically; a pair of left and right sliders 42 (detailed later) which are attached to the wind screen 31 and engaged with the pair of left and right rails 41; and a pair of left and right elastic members (not shown here, detailed later) which are fitted to the sliders 42 respectively and are in sliding contact with the pair of left and right rails 41 respectively.

The pair of left and right rails 41 consists of a left rail 44L (detailed later, L is a subscript representing left; the same shall apply hereinafter) which is fixed on the left side (right side as seen in the figure; the same shall apply hereinafter) of the support member 32 with bolts 43, 43 and extends vertically, and a right rail 44R (R is a subscript representing right; the same shall apply hereinafter) which is fixed on the right side (left side as seen in the figure; the same shall apply hereinafter) of the support member 32 with bolts 43, 43 and extends vertically.

The left rail 44L and right rail 44R are fastened to the support member 32 with bolts in the above case; however, they may be fastened by welding, which means that another fastening method may be adopted.

The pair of left and right sliders 42 consists of a left slider 45L (detailed later) which is attached to the wind screen 31 and engaged with the left rail 44L, and a right slider 45R which is attached to the wind screen 31 and engaged with the right rail 44R.

Also the pair of left and right elastic members consists of a left elastic member (not shown, detailed later) which is attached to the left slider 45L and is in sliding contact with the left rail 44L, and a right elastic member (not shown) which is attached to the right slider 45R and is in sliding contact with the right rail 44R.

46 denotes a fitting member, 47 screws, 48 long holes for slider movement provided on the cowling, and 49 a bolt cover.

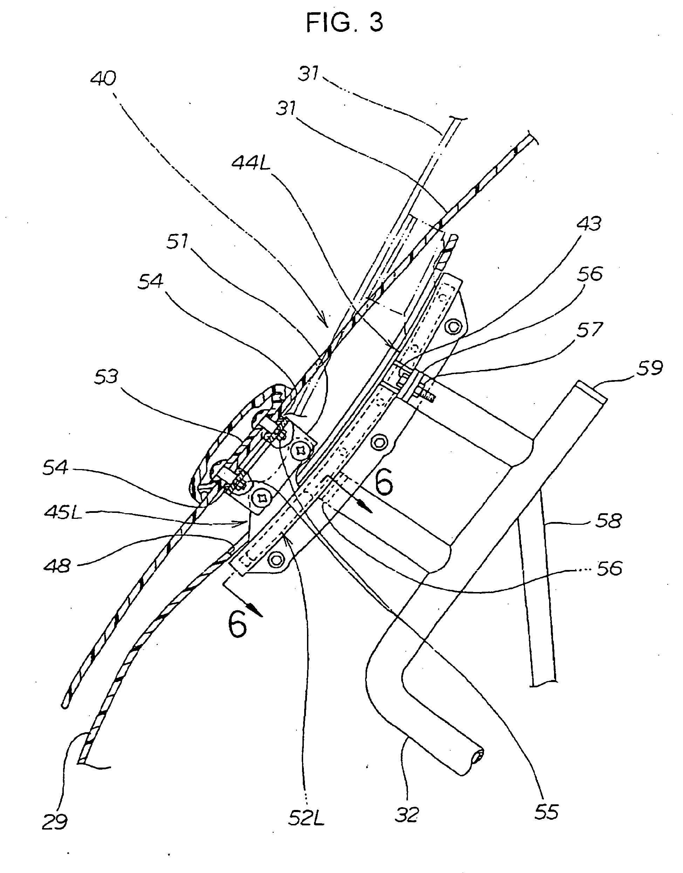

Fig. 3 is a sectional view taken along the line 3-3 in Fig. 2, showing that the left slider 45L is slidably supported by the left rail 44L and the wind screen 31 is attached through a connecting plate 51.

The left elastic member 52L (detailed later), one of the paired left and right elastic members, is fitted to the left slider 45L. The structural details of the left rail 44L, left slider 45L and left elastic member 52L will be explained in reference to the next figure.

53 denotes a bolt seat, 54 a washer, 565 a nut, 56 a rail receiving seat, 57 a nut, 58 a reinforcing member, and 59 a stopper.

Since the left slider 45L is slidably supported by the left rail 44L, as the rider moves up the wind screen 31, the left slider 45L can move up on the left rail 44L. This can shift the wind screen 31 to the position indicated by the chain double-dashed line.

Only the left rail 44L and left slider 45L have been described so far. The right rail 44R and right slider 45R are structurally the same as the left rail 44L and left slider 45L respectively, so an explanation given below will focus on the left rail 44L and left slider 45L.

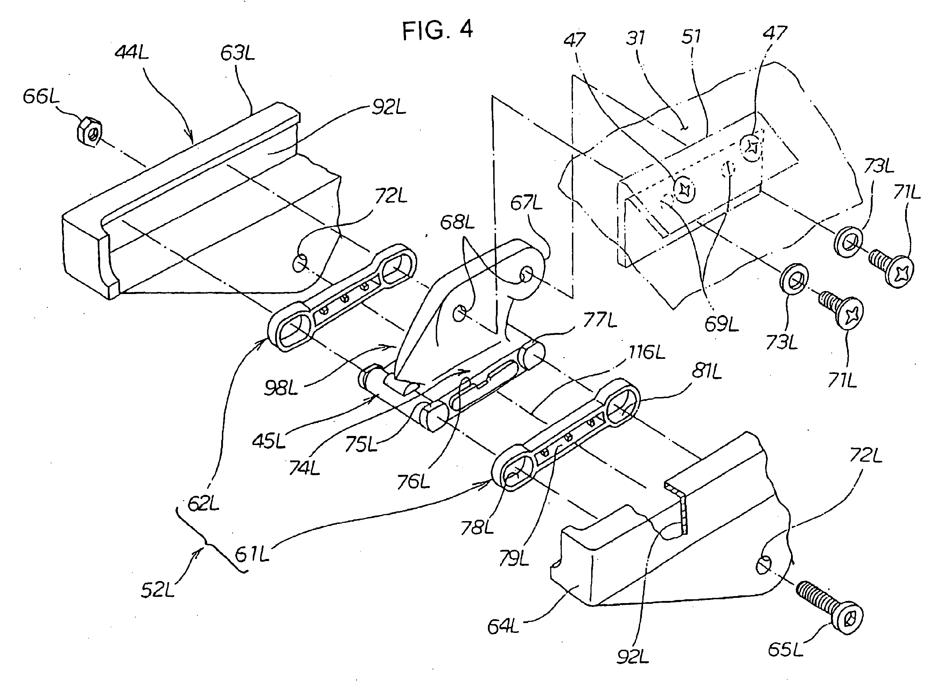

Fig. 4 is an exploded perspective view of a rail according to the present invention, showing that a left first elastic member 61 L as one of the left elastic members 52L, for example, made of resin, is fitted on the front side of the left slider 45L, and a left second elastic member 62L as one of the left elastic members 52L, for example, made of resin, is fitted on the back side of the left slider 45L; and the left slider 45L with the left first elastic member 61 L and left second elastic member 62L fitted thereto is sandwiched between the rail right half 63L and the rail left half 64L; and the left rail 44L is assembled by tightening the rail right half 63L and rail left half 64L with a bolt 65L and a nut 66L.

For example, two screw holes 68L, 68L are made in an upper part 67L of the left slider 45L and, for example, two bolts 71L, 71L are screwed into these screw holes 68L, 68L and, for example, two bolt holes 69L, 69L made in the connecting plate 51 to fix the wind screen 31. 72L denotes a bolt hole and 73L denotes a washer.

Although in the above case, the quantities of screw holes 68L, bolt holes 69L, bolts 71 L and washers 73L are 2, the quantities are arbitrary and not limited to 2.

Assuming that, along an alternate long and short dash line 116L parallel to the body transverse direction, the obliquely rightward and downward direction as seen in the figure is left and the obliquely leftward and upward direction is right, the left slider 45L has a left elastic member fitting part 74L and a right elastic member fitting part 98L which protrude toward the inner faces 92L of the left rail 44L, namely the inner face 92L of the rail left half 64L and the inner face 92L of the rail right half 63L, in order to fit the left first elastic member 61 L and the left second elastic member 62L to it.

The left elastic member fitting part 74L has a front end fitting part 75L in its leftmost position as seen in the figure and a middle fitting part 76L located away to the right from the front end fitting part 75L and a rear end fitting part 77L located away to the right from the middle fitting part 76L.

Since the right elastic member fitting part 98L is structurally the same as the left elastic member fitting part 74L, explanation of its structure is omitted.

The left first elastic member 61 L has a front end hole 78L which is located in the leftmost position as seen in the figure and to be fitted to the front end fitting part 75L, and a middle hole 79L (detailed later) which is located away to the right from the front end hole 78L and to be fitted to the middle fitting part 76L, and a rear end hole 81 L which is located away to the right from the middle hole 79L and to be fitted to the rear end fitting part 77L.

Regarding the structure of the elastic members, only the left first elastic member 61 L has been described above; the structure of the left second elastic member 62L is the same as the left first elastic member 61 L and therefore explanation of the structure of the left second elastic member 62L is omitted.

The right elastic member (not shown), like the left elastic member 52L, consists of a right first elastic member and a right second elastic member, and the right first elastic member and right second elastic member are structurally the same as the left first elastic member 61 L and left second elastic member 62L; therefore explanation of the right first elastic member and right second elastic member is omitted.

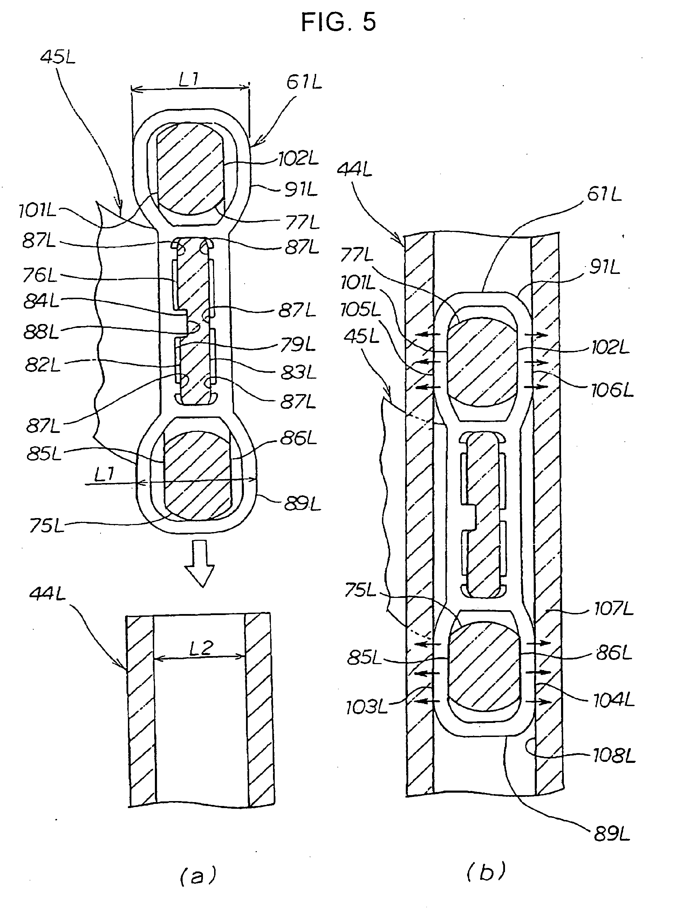

Figs. 5 are sectional views showing the positional relation among a rail, slider and elastic member according to the present invention; Fig. 5(a) shows that the middle fitting part 76L of the left slider 45L has a plane 82L on its left side (as seen in the figure) and a plane 83L on its right side with a concave fixing groove 84L in the center of the plane 82L.

The front end fitting part 75L of the left slider 45L has a front face 85L on its left side (as seen in the figure) and a rear face 86L on its right side. The rear end fitting part 77L has a front face 101 L on its left side (as seen in the figure) and a rear face 102L on its right side.

The middle hole 79L of the left first elastic member 61 L has, for example, five convex retaining projections 87L protruding inward as well as a convex positioning projection 88L protruding so as to fit the concave fixing groove 84L.

The quantity of convex retaining projections 87L is 5 in the above case; however the quantity is arbitrary and not limited to 5.

When the left slider 45L thus structured and the left first elastic member 61 L are joined as shown, the convex positioning projection 88L fits into the concave fixing groove 84L and the convex retaining projections 87L push the plane 82L and plane 83L of the middle fitting part 76L. Consequently the left first elastic member 61 L is tightly fitted to the left slider 45L, which prevents the left first elastic member 61 L from coming off the left slider 45L.

When the width of the front end part 89L and rear end part 91 L of the left first elastic member 61 L is expressed by L1 and the inner dimension of the left rail 44L is expressed by L2, the relation between L1 and L2 should be L1>L2. Next, the left slider 45L with the left first elastic member 61 L fitted thereto is inserted into the left rail 44L as indicated by the outlined arrow.

Fig. 5(b) shows that the left slider 45L and left first elastic member 61 L are fitted into the left rail 44L. Here, the front face 85L and rear face 86L of the front end fitting part 75L of the left slider 45L and the front face 101 L and rear face 102L of its rear end fitting part 77L push the front face 103L and rear face 104L of the front end part 89L of the left first elastic member 61 L and the front face 105L and rear face 106L of its rear end part 91 L against the left rail 44L in the direction of the wall thickness 107L as indicated by the arrows.

In other words, when the left slider 45L is fitted into the left rail 44L, the left first elastic member 61 L compresses so as to decrease the width from L1 to L2 and apply a pushing force to the left rail 44L.

Therefore, when the wind screen (31 in Fig. 3) is moved, the left slider 45L for supporting the wind screen always slides on the left rail 44L through the left first elastic member 61L, so the left slider 45L does not jolt against the left rail 44L. Therefore, the left slider 45L is prevented from jolting during movement of the wind screen.

In addition, the left rail 44L is characterized by having, as its inner face, a left elastic member compressing surface 108L which compresses the front face 103 and rear face 104L of the front end part 89L of the left first elastic member 61 L and the front face 105L and rear face 1 06L of its rear end part 91 L which are fitted to the front face 85L and rear face 86L of the front end fitting part 75L and the front face 101 L and rear face 102L of the rear end fitting part 77L in a way to cover them.

Therefore, when the left slider 45L is fitted into the left rail 44L, the left first elastic member 61 L is unfailingly compressed. The left first elastic member 61 L constantly applies a uniform pushing force to the left elastic member compressing surface 108L, further increasing the possibility that the left slider 45L is prevented from jolting during movement of the wind screen.

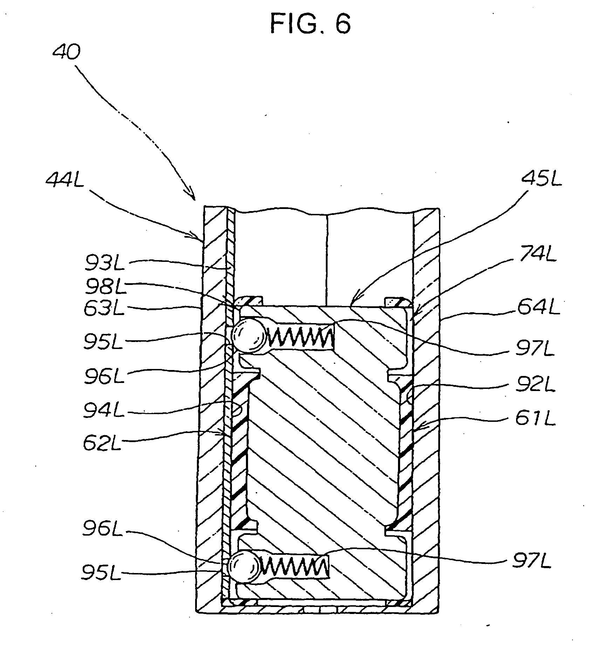

Fig. 6 is a sectional view taken along the line 6-6 in Fig. 3, showing that the left slider 45L contacts the inner face 92L of the rail left half 64L through the left first elastic member 61 L (right as seen in the figure) and also contacts the upper face 94L of a positioning plate 93L attached to the rail right half 63L through the left second elastic member 62L (left as seen in the figure). This prevents the left slider 45L from jolting in the body transverse direction.

The left slider 45L has steel balls 96L, 96L to fit into a plurality of positioning holes 95L made in the positioning plate 93L and these steel balls 96L, 96L are fitted into the positioning holes 95L, 95L by being pushed by compression coil springs 97L, 97L. Therefore, the wind screen (31 in Fig. 3) can be fixed in a desired position.

Furthermore, since the left elastic member fitting part 74L and right elastic member fitting part 98L of the left slider 45L protrude left (right as seen in the figure) and right (left as seen in the figure), namely in the body transverse direction, the left first elastic member 61 L and left second elastic member 62L are fitted to the left elastic member fitting part 74L and right elastic member fitting part 98L.

Since the left slider 45L is thus supported by the left rail 44L through the left first elastic member 61 L and left second elastic member 62L, rigidity in support of the left slider 45L is improved. This permits the left slider 45L to slide smoothly during movement of the wind screen.

Next, how the wind screen supporting mechanism 40 thus structured works will be explained.

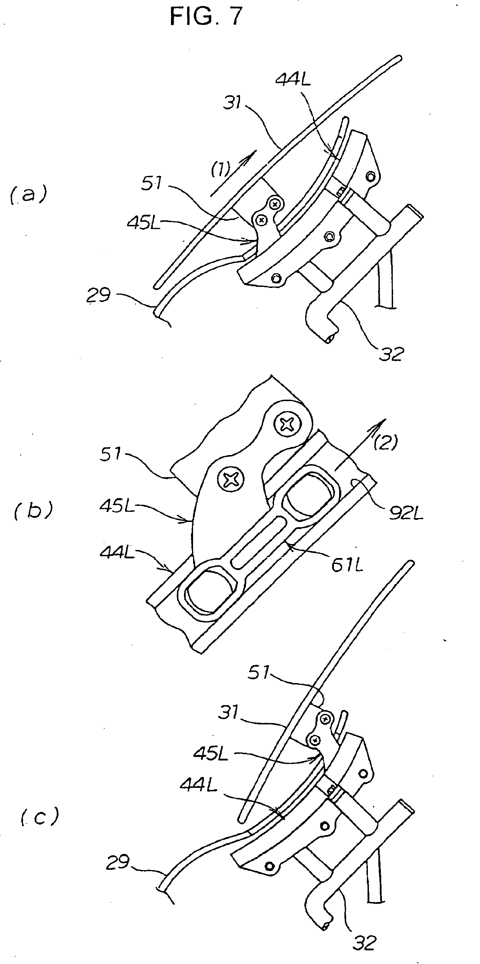

Figs. 7 are drawings which explain the function of the wind screen supporting mechanism according to the present invention, in which Fig. 7(a) shows that the wind screen 31 is moved up as indicated by arrow (1).

Fig. 7(b) shows that as the wind screen 31 is moved up as shown in Fig. 7(a), the left slider 45L slides on the inner face 92L of the left rail 44L through the left first elastic member 61 L as indicated by arrow (2).

Fig. 7(c) shows that the wind screen 31 has finished moving up.

Since the wind screen supporting mechanism 40 includes the left rail 44L, left slider 45L for supporting the wind screen 31, left first elastic member 61 L and left second elastic member (62L in Fig. 4), the number of its components is decreased. This means that the price of the wind screen supporting mechanism 40 can be lowered. Therefore, it is possible to provide an inexpensive wind screen supporting mechanism 40 for a motorcycle which vertically movably supports the wind screen 31.

The wind screen supporting mechanism 40 described above has a left elastic member fitting part and a right elastic member fitting part on the left and right sides of a slider so that elastic members are fitted to the left elastic member fitting part and right elastic member fitting part. An effective approach for a more inexpensive wind screen supporting mechanism is to decrease the number of components. Next, as an effort to decrease the number of components by decreasing the numbers of elastic member fitting parts and elastic members, an embodiment will be explained in which an elastic member fitting part is provided on either the left or right side of the slider and an elastic member is fitted to the elastic member fitting part.

Fig. 8 shows a modified version of the embodiment shown in Fig. 4; the same components as those in Fig. 4 are designated by the same reference numerals as those in Fig. 4 and their descriptions are omitted here. A left elastic member 112L, for example, made of resin, is fitted on the front side of the left slider 111L, and the left slider 111L with the left elastic member 112L fitted thereto is sandwiched between the rail right half 113L and the rail left half 114L, and the left rail 115L is assembled by tightening the rail right half 113L and rail left half 114L with a bolt 65L and a nut 66L.

Assuming that, along an alternate long and short dash line 116L parallel to the body transverse direction, the obliquely rightward and downward direction as seen in the figure is left and the obliquely leftward and upward direction is right, the left slider 111 L has a left elastic member fitting part 118L protruding toward the inner face of the left rail 115L, namely the inner face 117L of the rail left half 114L, for example, on the left side in order to fit the left elastic member 112L to it.

Although the left elastic member fitting part 118L is provided on the left side of the left slider 111 L in the above case, instead it may be provided on the right side of the left slider 111 L. Whether it is provided on the left side or right side of the left slider 111 L is arbitrarily selected.

The left elastic member fitting part 118L has a front end fitting part 119L in its leftmost position as seen in the figure and a middle fitting part 121 L located away to the right from the front end fitting part 119L and a rear end fitting part 122L located away to the right from the middle fitting part 121 L.

The left elastic member 112L has a front end hole 123L which is located in the leftmost position as seen in the figure and to be fitted to the front end fitting part 119L, and a middle hole 124L which is located away to the right from the front end hole 123L and to be fitted to the middle fitting part 121L, and a rear end hole 125L which is located away to the right from the middle hole 124L and to be fitted to the rear end fitting part 122L. 126L denotes a bolt hole.

Since the left slider 111 L has a left elastic member fitting part 118L only on its left side, it is manufactured at lower cost than when it has elastic member fitting parts on both the left and right sides. Besides only one elastic member is needed as a left elastic member. Therefore, a more inexpensive wind screen supporting mechanism can be realized.

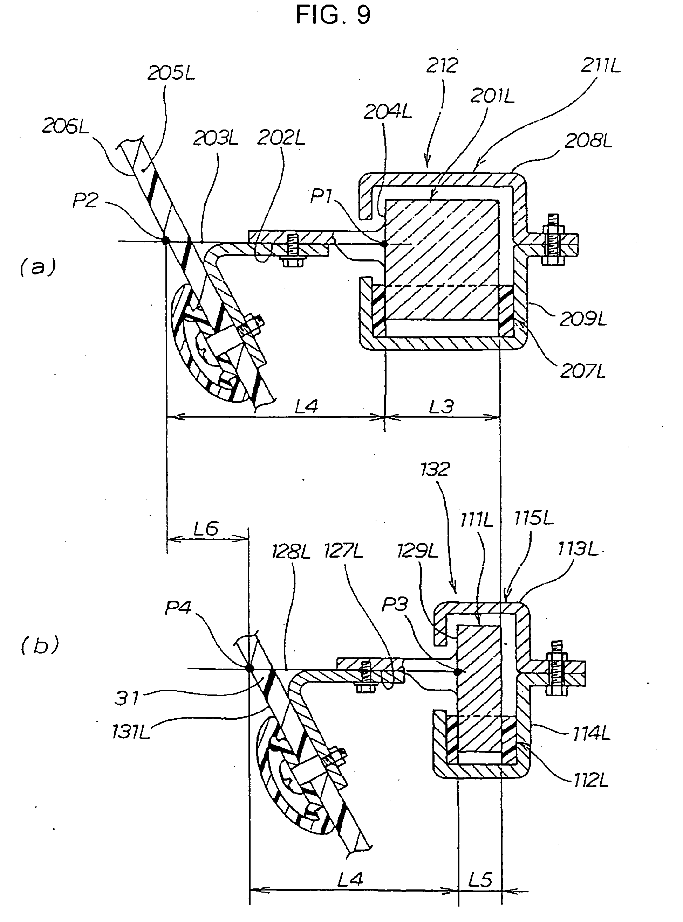

Figs. 9 show comparison between a wind screen supporting mechanism as a comparative example and an embodiment of the present invention, in which Fig. 9(a) shows a comparative example as a wind screen assembled with a wind screen supporting mechanism in the related art and Fig. 9(b) shows an embodiment of the invention as a wind screen assembled with a wind screen supporting mechanism (shown in Fig. 8).

Fig. 9(a) shows that the sectional length of a left slider 201L is expressed by L3 and on a line 203L drawn along the connecting plate mounting surface 202L of the left slider 201L, the distance from point P1 of the outer face 204L of the left slider 201L to point P2 of the outer face 206L of the wind screen 205L is expressed by L4.

207L denotes a left elastic member, 208L a rail right half, 209L a rail left half, 211L a left rail, and 212 a wind screen supporting mechanism.

Fig. 9(b) shows that the sectional length of a left slider 111L is expressed by L5 and in the same way as in Fig. 9(a), on a line 128L drawn along the connecting plate mounting surface 127L of the left slider 111L, the distance from point P3 of the outer face 129L of the left slider 111L to point P4 of the outer face 131L of the wind screen 31 is expressed by L4, where this distance L4 is equal to distance L4 in Fig. 9(a). 132 denotes a wind screen supporting mechanism.

The difference as a result of subtraction of length L5 from length L3 in Fig. 9(a) is equal to distance L6, which means that the wind screen 31 is nearer to the wind screen supporting mechanism 132 by distance L6 than in the case of Fig. 9(a). In other words, the front part of the motorcycle (10 in Fig. 1) can be more compact because the wind screen 31 is nearer to the wind screen supporting mechanism 132.

In the embodiments, it is assumed that elastic members according to the present invention are made of resin. However, another material or another mechanism may be used: for example, rubber elastic members or a spring-plate combination which applies a pushing force to rails may be used.

### Industrial Applicability

The invention is directed to an inexpensive wind screen supporting mechanism for a motorcycle which vertically movably supports a wind screen.

The wind screen supporting mechanism 40 includes: a left rail 44L which is fixed on the motorcycle body and extends vertically; a left slider 45L which is attached to a wind screen 31 and engaged with the left rail 44L; and a left first elastic member 61 L and a left second elastic member 62L which are fitted to the left slider 45L and are in sliding contact with the left rail 44L.

Since the number of components is small, the price of the wind screen supporting mechanism 40 can be lowered. Therefore, it is possible to provide an inexpensive wind screen supporting mechanism 40 for a motorcycle which vertically movably supports the wind screen 31.

## Claims

1. A motorcycle (10) having a wind screen supporting mechanism (40; 132) which vertically movably supports a wind screen (31) provided on an upper part of a cowling (29) covering a front upper part of a body (12),
the wind screen supporting mechanism (40; 132) comprising, on the assumption that left and right correspond to the body's transverse direction:
left and right rails (41; 44R, L) which are fixed on the body (12) and extend vertically;
left and right sliders (42; 45R, L) which are attached to the wind screen (31) and engaged with the left and right rails (41; 44R, L); and
left and right elastic members (61 R, L, 62R, L; 112R, L) which are fitted to the left and right sliders (42; 45R, L) respectively and are in sliding contact with the left and right rails (41; 44R, L) respectively,
wherein, when fitting the sliders (42; 45R, L) into the rails (41; 44R, L), the elastic members (61R, L, 62R, L; 112R, L) are compressed to apply a pushing force to the rails (41; 44R, L),
**characterized in that**
the sliders (42; 45R, L) have front and rear end elastic member fitting parts (75L, 77L; 119L, 122L) protruding into a front end hole (78L; 122L) and a rear end hole (81 L; 125L) of the respective elastic member (61 R, L, 62R, L; 112R, L) and toward inner faces of the rails (41) for fitting the elastic members (61R, L, 62R, L; 112R, L), on either or both of left and right sides,
wherein the sliders (42; 45R, L) also have a middle fitting part (76R, L) protruding into a middle hole (79R, L) of the respective elastic member (61R, L, 62R, L; 112R, L), and the middle hole (79R, L) of the respective elastic member (61R, L, 62R, L; 112R, L) has convex retaining projections (87R, L) protruding inward as well as a convex positioning projection (88R, L) protruding so as to fit a concave fixing groove (84R, L) in the center of a plane (82R, L) on the one side of the middle fitting part (76R, L) of the slider (42, 45R, L).

2. The motorcycle (10) according to claim 1, wherein the rails (41; 44R, L) have elastic member compressing surfaces inside them to compress front and rear faces of the elastic members (61 R, L, 62R, L; 112R, L) which are fitted so as to cover the elastic member fitting parts' front faces on the body's frontward side and their rear faces on the body's rearward side.

## Patentansprüche

1. Kraftrad (10) mit einem Windschutzscheibenträgermechanismus (40; 132), der eine Windschutzscheibe (31) vertikal bewegbar trägt, die an einem oberen Teil einer Verkleidung (39) vorgesehen ist, die einen vorderen oberen Teil eines Rumpfs (12) abdeckt;
wobei der Windschutzscheibenträgermechanismus (40; 132) unter der Annahme, dass links und rechts der Rumpfquerrichtung entsprechen, umfasst:
linke und rechte Schienen (41; 44R, L), die an dem Rumpf (12) befestigt sind und sich vertikal erstrecken;
linke und rechte Schieber (42; 45R, L), die an der Windschutzscheibe (31) angebracht sind und mit den linken und rechten Schienen (41, 44R, L) in Eingriff stehen; und
linke und rechte elastische Elemente (61 R, L, 62R, L; 112R, L), die jeweils an den linken und rechten Schiebern (42; 45R, L) sitzen und jeweils mit den linken und rechten Schienen (41; 44R, L) in Gleitkontakt stehen;
worin, wenn die Schieber (42; 45R, L) in die Schienen (41; 44R, L) eingesetzt sind, die elastischen Elemente (61 R, L, 62R, L; 112R, L) zusammengedrückt werden, um auf die Schienen (41; 44R, L) eine Druckkraft auszuüben,
**dadurch gekennzeichnet, dass**
die Schieber (42; 45R, L) an entweder einer oder beiden linken und rechten Seiten am vorderen und hinteren Ende Elastikelementansetzteile (75L, 77L; 119L, 122L) aufweisen, die in ein vorderes Endloch (78L; 122L) und ein hinteres Endloch (81 L; 125L) des jeweiligen elastischen Elements (61 R, L, 62R, L; 112 R, L) und zu Innenflächen der Schienen (41) hin vorstehen, zum Ansetzen der elastischen Elemente (61 R, L, 62R, L; 112R, L),
worin die Schieber (42; 45R, L) auch ein mittleres Ansetzteil (76R, L) aufweisen, das in ein mittleres Loch (79R, L) des jeweiligen elastischen Elements (61 R, L, 62R, L; 112R, L) vorsteht, und das mittlere Loch (79R, L) des jeweiligen elastischen Elements (61 R, L, 62R, L; 112R, L) konvexe Haltevorsprünge (87R, L), die einwärts vorstehen, sowie einen konvexen Positionierungsvorsprung (88R, L), der so vorsteht, dass er in eine konkave Fixierungsnut (84R, L) in der Mitte einer Ebene (82R, L) an der einen Seite des mittleren Ansetzteils (76R, L) des Schiebers (42, 45R, L) passt, aufweist.

2. Das Kraftrad (10) gemäß Anspruch 1, worin die Schienen (41; 44R, L) an ihrer Innenseite Elastikelementkompressionsoberflächen haben, um die Vorder- und Rückseiten der elastischen Elemente (61 R, L, 62R, L; 112R, L) zu komprimieren, welche so eingesetzt sind, dass sie die Vorderflächen der Elastikelementeinsetzteile an der Vorderseite des Rumpfs und deren Rückseiten an der Rückseite des Rumpfs abdecken.

## Revendications

1. Motocyclette (10) comportant un mécanisme de support de pare-brise (40 ; 132) qui supporte de manière mobile verticalement un pare-brise (31) disposé sur une partie supérieure d'un capot (29) couvrant une partie supérieure frontale d'une carrosserie (12),
le mécanisme de support de pare-brise (40 ; 132) comprenant, en considérant que gauche et droite correspondent à la direction transversale de la carrosserie :
des glissières gauche et droite (41 ; 44R, L) qui sont fixées à la carrosserie (12) et s'étendent verticalement ;
des coulisseaux gauche et droit (42 ; 45R, L) qui sont fixés au pare-brise (31) et sont accouplés avec les glissières gauche et droite (41 ; 44R, L) ; et
des éléments élastiques gauche et droit (61R, L ; 62R, L ; 112R, L) qui sont disposés sur les coulisseaux gauche et droit (42 ; 45R, L), respectivement, et sont en contact coulissant avec les glissières gauche et droite (41 ; 44R, L), respectivement,
dans laquelle, quand les coulisseaux (42 ; 45R, L) sont disposés dans les glissières (41 ; 44R, L), les éléments élastiques (61R, L ; 62R, L ; 112R, L) sont comprimés pour appliquer une force de poussée sur les glissières (41 ; 44R, L),
**caractérisée en ce que**
les coulisseaux (42 ; 45R, L) comportent des parties de montage d'élément élastique sur les extrémités frontale et arrière (75L, 77L ; 119L, 122L) saillantes dans un trou d'extrémité frontal (78L ; 122L) et un trou d'extrémité arrière (81L, 125L) de l'élément élastique (61R, L ; 62R, L ; 112R, L) respectif et vers les faces intérieures des glissières (41) pour monter les éléments élastiques (61R, L ; 62R, L ; 112R, L) sur l'un ou les deux des côtés gauche et droit,
dans laquelle les coulisseaux (42 ; 45R, L) comportent également une partie d'installation centrale (76R, L) saillante dans un trou central (79R, L) de l'élément élastique (61R, L ; 62R, L ; 112R, L) respectif, et le trou central (79R, L) de l'élément élastique (61R, L ; 62R, L ; 112R, L) respectif comporte des protubérances de retenue convexes (87R, L) saillantes vers l'intérieur ainsi qu'une protubérance de positionnement convexe (88R, L) saillante de façon à adapter une rainure de fixation concave (84R, L) dans le centre d'un plan (82R, L) sur le côté de la partie d'installation centrale (76R, L) du coulisseau (42, 45R, L).

2. Motocyclette (10) selon la revendication 1, dans laquelle les glissières (41 ; 44R, L) comportent des surfaces de compression d'élément élastique à l'intérieur de celles-ci pour comprimer les faces frontale et arrière des éléments élastiques (61R, L ; 62R, L ; 112R, L) qui sont disposés de façon à couvrir les faces frontales des parties d'installation de l'élément élastique sur le côté frontal de la carrosserie et leurs faces arrière sur le côté arrière de la carrosserie.
